Europäisches Patentamt

European Patent Office

Office européen des brevets

(19)

(11) Numéro de publication : **0 017 599**
**B1**

(12) **FASCICULE DE BREVET EUROPÉEN**

(45) Date de publication du fascicule du brevet :
26.01.83

(51) Int. Cl.³ : **B 60 P 7/08**, B 62 D 33/00

(21) Numéro de dépôt : **80420024.4**

(22) Date de dépôt : **25.02.80**

(54) Plancher de véhicule comportant un dispositif de calage de charges.

(30) Priorité : **27.02.79 FR 7905809**

(43) Date de publication de la demande :
**15.10.80 Bulletin 80/21**

(45) Mention de la délivrance du brevet :
**26.01.83 Bulletin 83/04**

(84) Etats contractants désignés :
**BE DE IT NL**

(56) Documents cités :
**DE C 1 122 445**
**GB A 847 792**
**US A 3 508 764**
**US A 4 085 684**

(73) Titulaire : **Etablissements Françon et Cie (société anonyme)**
**5 avenue Berthelot**
**L'Horme F-42400 Saint-Chamond (FR)**

(72) Inventeur : **Françon, Jean**
**15 rue de la Verronnière**
**F-42400 Saint Chamond (FR)**

(74) Mandataire : **Buttet, Roger et al**
**"Cabinet Charras" 3, Place de l'Hôtel-de-Ville**
**F-42000 Saint-Etienne (FR)**

Jouve, 18, rue St-Denis, 75001 Paris, France

## Plancher de véhicule comportant un dispositif de calage de charges

Le transport de charges lourdes, encombrantes, de formes complexes ou fragiles, pose de nombreux problèmes d'arrimage, de calage ou de répartition, quel que soit le type de véhicule utilisé (avion, navire, wagon, poids-lourd...). Il n'est pas rare que des charges se déplacent en cours de transport, en raison de chocs, de réaction d'inertie, de changements brutaux de direction..., ce qui conduit à des détériorations, des déséquilibres dangereux. Des problèmes de calage se posent aussi dans certains cas, pour les plateformes ou planchers d'installation fixe.

Dans une application particulièrement visée, quoique non limitative, le dispositif selon l'invention est adapté sur des planchers de véhicules de transport d'automobiles ou similaires, en particulier de wagons aménagés à cet effet.

Ces planchers de véhicules sont en général réalisés en tôle nervurée transversalement ou longitudinalement comme le montre le Brevet US-A-3 508 764, et l'on dispose entre les nervures établies à un pas déterminé, des cales ou sabots appliqués en pression contre les pneus des véhicules à transporter ou reliés à la charge. Il est fréquent que sous l'effet des chocs, vibrations ou de la force centrifuge dans les courbes, les sabots glissent par rapport au plancher. Il s'ensuit des glissements des véhicules ou autres charges, qui viennent buter durement contre la superstructure du véhicule ou sur une charge voisine ou un autre véhicule transporté, ce qui engendre des détériorations de carrosseries, obligeant à des retouches coûteuses, ou des dommages aux charges transportées.

D'autre part, dans ce type de véhicules (routiers ou ferroviaires), les automobiles sont placées sur deux niveaux et très souvent, le plancher supérieur n'est pas étanche. Il se produit des fuites d'eau sale et graisseuse, s'écoulant sur les automobiles disposées sur le plancher inférieur, qui sont ainsi tachées.

La présente invention a pour but de remédier à ces inconvénients. L'invention telle que caractérisée dans les revendications résout le problème et comprend pour cela, un plancher utilisable indifféremment sur ses deux faces et présentant entre ou sur des nervures parallèles de renforcement établies à un pas déterminé, des formes en creux ou en saillie exécutées sur toute sa surface, suivant un pas identique, multiple ou sous-multiple du pas des nervures, et destinées à indexer suivant deux sens orthogonaux au moins, des formes complémentaires solidaires de tous moyens de calage des charges.

Les avantages obtenus grâce à cette invention permettent un positionnement efficace, rapide et rationnel des moyens de calage de charges, dans tous les sens, par les formes en creux ou en saillie prévues sur le plancher, pour coopérer avec les organes complémentaires des moyens de calage ; la possibilité d'utiliser les planchers pour tous types de charges, par adaptation de différents moyens de calage, et d'obtenir leur étanchéité par écoulements latéraux des eaux.

L'invention est exposée ci-après plus en détail, à l'aide de dessins représentant plusieurs modes d'exécution.

La figure 1 représente partiellement un plancher équipé du dispositif suivant une première forme de réalisation. On a illustré partiellement le socle d'un moyen de calage de charge ;

La figure 2 représente une vue en plan partielle du plancher selon la figure 1 ;

La figure 3 représente une vue en coupe partielle considérée suivant la ligne 3-3 de la figure 2 ;

Les figures 4, 5 et 6 représentent des vues en coupe à caractère schématique, illustrant les différentes phases de réalisation des extrémités des nervures du plancher selon l'invention (les figures 5 et 6 étant considérées suivant la ligne 5-5 de la figure 4) ;

La figure 7 représente une vue en perspective partielle montrant l'extrémité d'une nervure de plancher obtenue selon le procédé illustré aux figures 4, 5 et 6 ;

La figure 8 représente une vue en perspective partielle illustrant le plancher selon la figure 1, retourné, afin d'utiliser sa face inférieure pour disposer des charges ;

La figure 9 représente une vue en plan partielle, illustrant le plancher selon la figure 8, avec les différentes dispositions des moyens de calage ;

La figure 10 représente une vue en perspective partielle illustrant une autre forme de réalisation du plancher équipé du dispositif suivant l'invention.

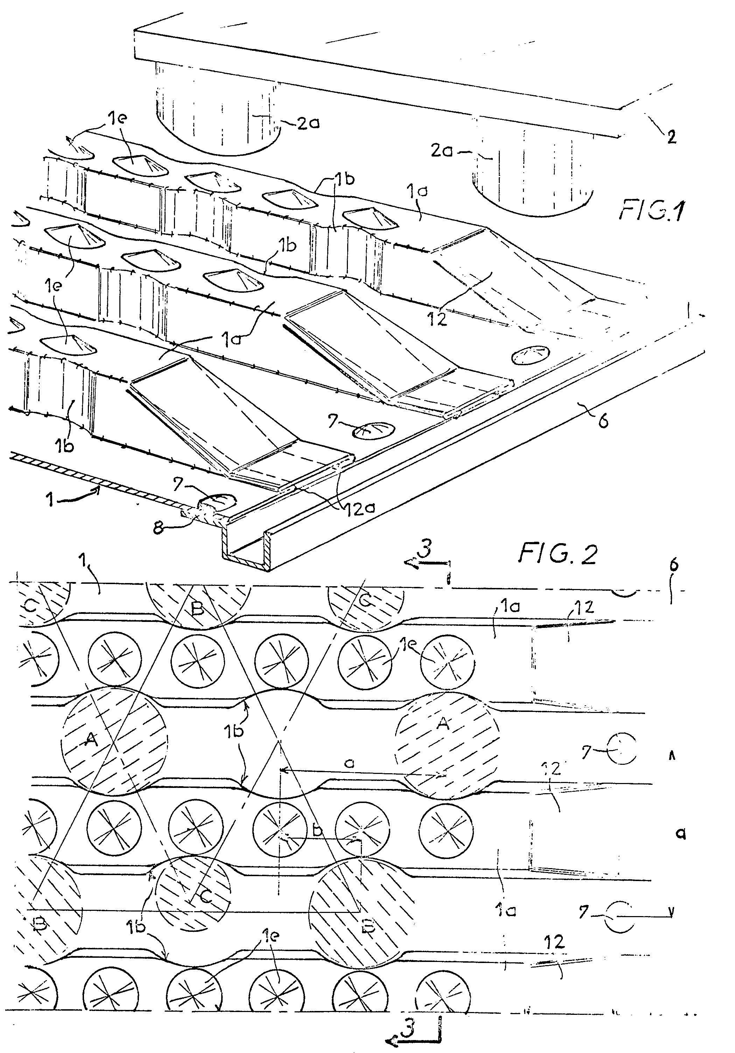

Conformément à la présente invention, le plancher illustré aux figures 1 à 9 des dessins, se présente sous la forme d'une feuille métallique (1) dans laquelle sont réalisées des ondes ou nervures parallèles 1a de raidissage, suivant un pas (a) prédéterminé.

Avec un outil d'emboutissage ou de brochage, de dimension plus grande que l'espace (a) entre chaque nervure, on exécute des décrochements ou creux 1b, en retrait des faces latérales coniques des nervures. Ces formes en creux sont établies sur toute la surface du plancher et suivant un pas identique au pas de nervures, ou suivant un pas multiple ou sous-multiple du pas des nervures. Les décrochements 1b sont soit alignés entre eux d'une rangée à l'autre, soit, comme illustré, décalés d'un demi-pas (cote b). Dans l'exemple illustré, les décrochements exécutés par un outil cylindrique, ont la forme d'arc de cercle mais il est bien évident qu'ils pourraient avoir tout autre profil (en V par exemple), et sont soit perpendiculaires aux faces, soit de même conicité que les faces des nervures.

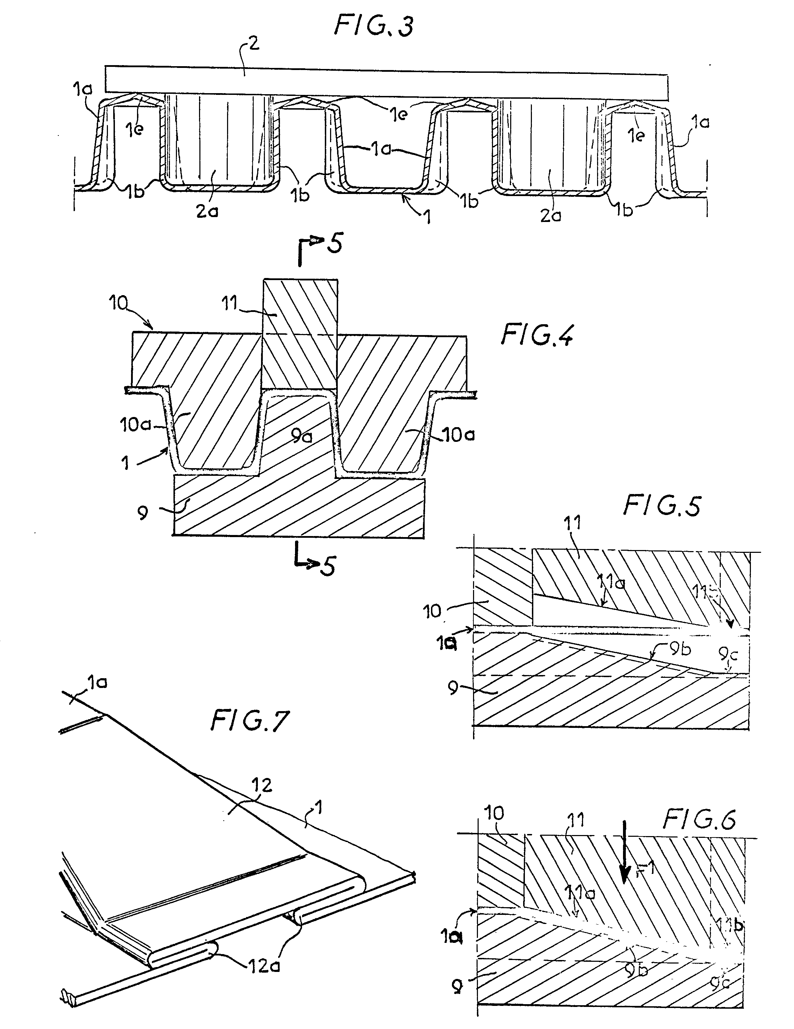

Deux décrochements face à face ainsi réalisés sont destinés à recevoir et à indexer au moins deux pions ou plots 2a formés sous un socle 2 (figures 1 et 3), solidaires directement des charges ou d'une manière rapportée, d'un moyen de calage de charges, de forme appropriée (non représenté).

On voit à la figure 2 différentes manières de positionner les pions d'un même socle. Par exemple, les pions A sont situés sur une même rangée et espacés de deux pas (de préférence à l'opposé de l'appui contre la charge) ; les pions B sont disposés en triangle. On peut également prévoir plus de trois pions par socle, suivant l'importance du moyen de calage, ou encore des formes d'indexation plus complexes comprenant plusieurs saillies de coopération avec les décrochements. Il est également possible de prévoir des pions de plus faible dimension que deux décrochements face à face, étant entendu que ces pions, une fois engagés dans les décrochements, ne puissent se déplacer ; on voit à la figure 2, de tels pions C disposés en triangle.

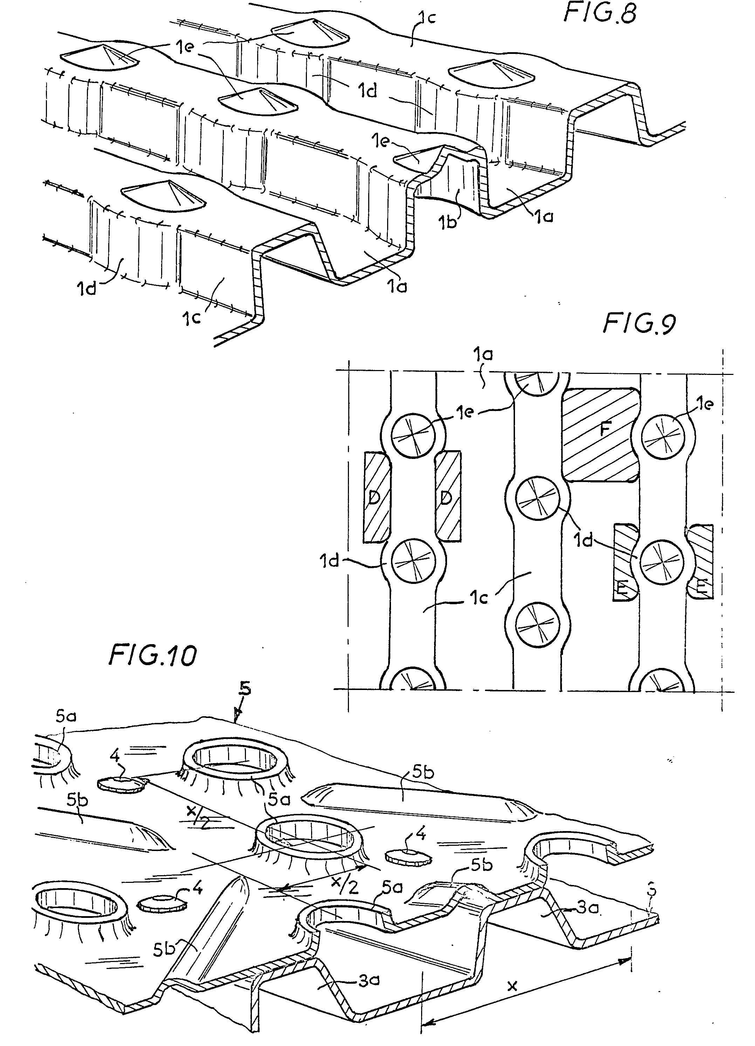

Le plancher équipé de nervures 1a et de décrochements 1b d'indexation des pions, peut être retourné et, comme on le voit aux figures 8 et 9, les nervures 1a constituent la face d'appui du plancher sur la superstructure du véhicule, tandis que les formes entre les nervures deviennent des nervures 1c sur lesquelles les décrochements sont transformés en saillies ou renflements 1d. Il est alors possible de positionner les moyens de calage d'une manière similaire à celle qui est prévue avec l'autre face du plancher. On peut par exemple, comme on le voit à la figure 9, placer des pinces D à cheval sur les nervures 1c, entre deux saillies ou renflements 1d, des chapes E à cheval sur les nervures 1c et autour des renflements 1d, ou encore des plots F entre deux nervures 1c et maintenus d'un côté entre deux renflements 1d, et de l'autre, par entourage d'un renflement 1d (dans le cas de renflements décalés ou en quinconce).

Dans les deux positions du plancher (figure 1 ou figure 8), on prévoit encore une surface d'appui des charges antidérapante. Pour cela, divers moyens peuvent être mis en œuvre et par exemple, des aspérités 1e réalisées par emboutissage ou similaire, sont disposées sur les nervures 1a et/ou les nervures 1c, à intervalles réguliers (un pas, un multiple de pas ou un sous-multiple de pas).

Une autre forme de réalisation du plancher et du dispositif d'indexation des moyens de calage, est illustrée à la figure 10 où l'on voit que le plancher présente une feuille inférieure 3 avec des nervures parallèles 3a établies à un pas déterminé x. Sur cette feuille-support est rivée en 4 ou autrement fixée, une plaque plane 5 reposant sur les nervures.

Dans cette plaque on exécute, par emboutissage ou similaire, des collerettes ou « crevés » 5a de toutes formes (circulaire dans l'exemple illustré), pour recevoir et indexer les pions ou plots correspondants, des moyens de calage précités. Les collerettes 5a sont établies de préférence entre les nervures 3a et suivant un pas égal, multiple ou sous-multiple du pas des nervures 3a. Comme précédemment, on peut également disposer les collerettes en quinconce, d'une rangée à l'autre, avec par exemple, un intervalle d'un demi pas x/2.

Afin de raidir la plaque 5, on prévoit également des nervures 5b ou autres aspérités embouties, réparties entre les collerettes et les organes de fixation des deux éléments de plancher ; ces nervures pouvant être en creux.

A noter que les aspérités de raidissage sont de hauteur plus réduite que les collerettes, afin que ces dernières, lorsqu'elles ne sont pas remplies par des pions, jouent un rôle de surface antidérapante, comme les emboutis 1e du plancher 1.

Lorsque les planchers selon les figures 1, 8 ou 10, sont utilisés comme planchers supérieurs de véhicules à deux niveaux, on a vu qu'il se pose un problème d'étanchéité. Pour le résoudre, on prévoit selon l'invention, un aménagement complémentaire du plancher, comme illustré aux figures 1, 2, 4, 5, 6 et 7.

En premier lieu, il faut acheminer les eaux de pluie tombant sur le plancher, vers des organes de récupération et d'écoulement latéraux, étant donné que les nervures du plancher sont disposées transversalement sur le véhicule.

Pour cela, les extrémités des nervures 1a, 1c ou 3a, sont fermées ou terminées par des pentes de raccordement avec la surface de fond, afin que l'eau s'écoule directement dans des gouttières latérales 6, fixées sous le plancher par rivets 7 ou similaires, avec interposition d'un joint d'étanchéité 8 (figure 1).

Pour exécuter les extrémités fermées des nervures 1a, 1c ou 3a, on prévoit un outillage particulier dont on a illustré schématiquement un exemple aux figures 4, 5 et 6 des dessins.

On voit que les extrémités des nervures sont maintenues entre une matrice 9 et des poinçons 10 et 11. La matrice 9 présente une forme en saillies 9a pour s'engager dans la nervure, et des côtés latéraux d'appui des parties du plancher, entre les nervures ; tandis que le poinçon 10 présente des saillies 10a se logeant dans les parties du plancher entre les nervures. La matrice 9 présente un décrochement incliné 9b raccordé par une partie plane 9c, à l'extrémité de la nervure, tandis que le poinçon mobile 11 présente une saillie 11a et une partie plane 11b complémentaire aux parties 9b-9c de la matrice (figure 5).

On comprend que lorsque le poinçon mobile 11 se déplace en direction de la matrice (flèche F1, figure 6), l'extrémité de la nervure 1a, 1c ou 3a vient s'appliquer sur la matrice en formant une pente 12, l'excédent de métal formant un double S aplati 12a (figure 7), du fait que le métal est retenu par les parois du poinçon 10 et que le plancher est d'autre part convenablement maintenu par des presse-flans appropriés.

A noter que ces opérations de fermeture peuvent être réalisées en même temps que les nervures, par un outillage approprié.

## Revendications

1. Plancher de véhicule comportant un dispositif de calage de charges, ledit plancher étant constitué d'une structure métallique ondulée (1), en une ou plusieurs parties, présentant des nervures parallèles (1a) de renforcement établies à un pas (a) déterminé, caractérisé en ce que ce plancher utilisable indifféremment sur ses deux faces, présente entre ou sur les nervures parallèles (1a), des formes en creux (1b) ou en saillie (1d), ou en saillie et en creux (5a), exécutées sur toute la surface du plancher (1 ou 3), suivant un pas identique, multiple ou sous-multiple du pas des nervures et qui sont destinées à indexer suivant deux sens orthogonaux au moins, des cales de formes complémentaires (A, B, C, D, E, F) aux formes du plancher, solidaires directement des charges ou de moyens de calage des charges.

2. Plancher selon la revendication 1, caractérisé en ce que les formes d'indexation des moyens de calage, sont constituées par des décrochements (1b) ou des renflements (1d), de profil quelconque, exécutés par emboutissage ou similaire, sur les faces latérales des nervures (1a) ou (1c), à l'aide d'un outil ou d'une série d'outils de plus grande dimension que l'espace entre deux nervures, de manière que chaque forme complémentaire d'un moyen de calage de charge, puisse être engagée et positionnée entre deux décrochements (1b) ou renflements (1d), situés face à face, le sommet des nervures (1c) présentant des saillies (1e) régulièrement réparties, pour constituer une surface de chargement antidérapante.

3. Plancher selon les revendications 1 et 2, caractérisé en ce que les décrochements (1b) ou les renflements (1d) d'indexation des formes complémentaires solidaires des moyens de calage, sont exécutés suivant un demi-pas par rapport au pas des nervures (1a), et de manière alternée, d'une nervure à l'autre.

4. Plancher selon les revendications 1, 2 et 3, caractérisé en ce que les décrochements (1b) ou les renflements (1d) d'indexation sont des arcs de cercle réalisés par un ou des outils de section circulaire.

5. Plancher selon les revendications 1, 2, 3 et 4, caractérisé en ce que les formes complémentaires solidaires des moyens de calage, sont des pions ou doigts cylindriques (A, B, ou C), ou d'autre section, pour coopérer avec deux décrochements (1b) en arcs de cercle ou d'autre profil, se faisant face.

6. Plancher selon les revendications 1, 2, 3 et 4, caractérisé en ce que les formes complémentaires solidaires des moyens de calage, sont des blocs ou plots (F) de section aptes à s'engager entre un renflement (1d) et un décrochement (1b) se faisant face.

7. Plancher selon les revendications 1, 2, 3 et 4, caractérisé en ce que les formes complémentaires des moyens de calage, sont des pinces (D) profilées pour chevaucher les nervures (1c) entre deux décrochements (1b).

8. Plancher selon les revendications 1, 2, 3 et 4, caractérisé en ce que les formes complémentaires solidaires des moyens de calage, sont des chapes (E) profilées pour chevaucher les nervures (1c) entre deux renflements (1d).

9. Plancher selon les revendications 1, 2, 3 et 4, caractérisé en ce que les décrochements (1b) ou les renflements (1d) sont exécutés perpendiculairement aux grandes faces du plancher, ou avec une conicité semblable ou proche de celle des nervures (1a) ou (1c).

10. Plancher selon la revendication 1, caractérisé en ce qu'il est formé d'un caisson composé d'une feuille nervurée (3) et d'une plaque plane (5) assemblée à la feuille nervurée par rivetage (4) ou autre moyen, sur des lignes passant par le sommet des nervures (3a).

11. Plancher selon la revendication 8, caractérisé en ce que les formes d'indexation des moyens de calage des charges, sont des collerettes (5a) exécutées en relief sur la face de la plaque supérieure (5) recevant les charges.

12. Plancher selon la revendication 9, caractérisé en ce que les collerettes (5a) sont exécutées entre les nervures (3a) de la feuille et de manière alignée ou en quinconce pour chaque pas, sous-multiple de pas ou multiple de pas.

13. Plancher selon les revendications 1, 8, 9 et 10, caractérisé en ce que les formes embouties (5b), exécutées en relief ou en creux sur la plaque supérieure (5), entre les collerettes (5a) d'indexation, sont de hauteur inférieure à celle des collerettes (5a).

14. Plancher selon les revendications 1 à 11, caractérisé en ce que les nervures disposées transversalement sont fermées à chaque extrémité par emboutissage supplémentaire, créant une pente d'écoulement (9b) en direction de gouttières latérales (6) rapportées sous le plancher.

**Claims**

1. Vehicle floor having a load wedging device, said floor consisting of a corrugated metal structure (1) made one-piece or in a plurality of parts, having parallel stiffening ribs (1a) disposed at a predetermined pitch (a), characterized in that said floor, which can be used indifferently on both faces, is provided between or upon the parallel ribs (1a) with recessed (1b) or projecting (1d) forms, or projecting and recessed forms (5a), arranged on the whole surface of the floor (1 or 3) at a similar pitch which is a multiple or a submultiple of the pitch of the ribs, said forms being intended for registering in accordance with at least two orthogonal directions the wedges with a shape (A, B, C, D, E, F) complementary to the forms of the floor, which are directly associated with the loads or the load wedging means.

2. Floor as claimed in claim 1, characterized in that the registering forms for the wedging means consist of reliefs (1b) or bulges (1d) of any shape made by stamping or the like on the side faces of the ribs (1a) or (1c) by means of a tool or of a series of tools of a larger size than the space between two ribs, so that each form complementary to a load wedging means could be engaged and positioned between two reliefs (1b) or bulges (1d) located opposite one another, the apex of the ribs (1c) being provided with projections (1e) regularly distributed to constitute a nonskid loading surface.

3. Floor as claimed in claim 1 and 2, characterized in that the reliefs (1b) or the bulges (1d) for registering the complementary forms associated with the wedging means are made at a half-pitch relative to the pitch of the ribs (1a), and in an alternate manner from one rib to the other one.

4. Floor as claimed in claim 1, 2 and 3, characterized in that the registering reliefs (1b) or the registering bulges (1d) are in the form of circle arcs made with one or more tools of circular section.

5. Floor as claimed in claim 1, 2, 3 and 4, characterized in that the complementary forms associated with the wedging means are cylindrical studs or fingers (A, B or C), the section of which can be other than cylindrical, said studs or fingers cooperating with two opposite arc shaped reliefs (1b) or with two opposite reliefs (1b) of other section.

6. Floor as claimed in claim 1, 2, 3 and 4, characterized in that the complementary forms associated with the wedging means are blocks or steps (F) having a section which is adapted for engagement between a bulge (1d) and a relief (1b) facing each other.

7. Floor as claimed in claim 1, 2, 3 and 4, characterized in that the complementary forms associated with the wedging means are clips (D) which are shaped to overlap the ribs (1c) between two reliefs (1b).

8. Floor as claimed in claim 1, 2, 3 and 4, characterized in that the complementary forms associated with the wedging means are yokes (E) which are shaped to overlap the ribs (1c) between two bulges (1d).

9. Floor as claimed in claim 1, 2, 3 and 4, characterized in that the reliefs (1b) or the bulges (1d) are made normal to the larger faces of the floor, or with a conicity which is the same or approximately the same as the conicity of the ribs (1a) or (1c).

10. Floor as claimed in claim 1, characterized in that said floor is formed of a box consisting of a webbed sheet (3) and of a flat plate (5), the latter being assembled to the webbed sheet by rivets (4) or the like, along lines extending through the apex of the ribs (3a).

11. Floor as claimed in claim 8, characterized in that the registering forms of the load wedging means are collars (5a) which are made projecting from the face of the load receiving upper plate (5).

12. Floor as claimed in claim 9, characterized in that the collars (5a) are provided between the ribs (3a) of the sheet and in an aligned or staggered manner for each pitch, pitch submultiple or pitch multiple.

13. Floor as claimed in claim 1, 8, 9 and 10, characterized in that the stamped forms (5b), made projecting from or recessed in the upper plate (5), between the registering collars (5a), are of lesser height than the collars (5a).

14. Floor as claimed in claims 1-11, characterized in that the ribs, disposed transversely, are closed at each end by additional stamping, in order to provide an outflow slope (9b) toward lateral water-ways (6) inserted under the floor.

**Ansprüche**

1. Wagenladefläche mit einer Vorrichtung zum Verkeilen der Ladung, und die aus einem ein- oder mehrteiligen wellenförmigen Metallaufbau (1) besteht, der gleichlaufende, nach einer vorbestimmten Steigung (a) vorgesehene Versteifungsrippen (1a) aufweist, dadurch gekennzeichnet, dass diese sowohl auf einer Seite als auf der anderen Seite verwendbare Ladefläche zwischen oder auf den gleichlaufenden Rippen (1a) vertiefte (1b) oder vorspringende (1d) Formen oder auch vorspringende und vertiefte Formen (5a) aufweist, die auf der ganzen Länge der Oberfläche der Ladefläche (1 oder 3) nach einer ähnlichen, das Mehrfache oder eine Unterteilung der Rippensteigung darstellenden Steigung vorgesehen und dazu bestimmt sind, die zu den Ladeflächeformen ergänzungsförmigen, mit den Ladungen oder den Ladungsverkeilungsmitteln unmittelbar festgemachten Keile (A, B, C, D, E, F) nach am mindestens zwei rechtwinklichen Richtungen zu registrieren.

2. Ladefläche nach Anspruch 1, dadruch gekennzeichnet, dass die Registrierungsformen der Verkeilungsmittel aus Abstufungen (1b) oder Ausbauchungen (1d) von beliebiger Formgebung bestehen, die durch Tiefziehen oder ähnliches Verfahren auf die Seitenflächen der Rippen (1a) oder (1b) mittels eines Werkzeugs oder einer Werkzeugreihe grösserer Abmessung als der Zwischenraum zwischen zwei Rippen ausgeführt sind, sodass jede Ergänzugsform zu einem Verkeilungsmittel der Ladung zwischen zwei entgegengesetzten Abstufungen (1b) oder Ausbauchungen (1d) eingesetzt und eingerichtet werden kann, wobei der Scheitel der Rippen (1c) regelmässig verteilte Vorsprünge (1e) aufweist, um eine rutschsichere Ladefläche zu bilden.

3. Ladefläche nach den Ansprüchen 1 und 2, dadurch gekennzeichnet, dass die Registrierungsabstufungen (1b) oder Ausbauchungen (1d) der mit den Verkeilungsmitteln zusammenwirkenden Ergänzungsformen nach einer Halbsteigung in bezug auf die Steigung der Rippen (1a), und zwar wechselweise von einer Rippe zur anderen ausgeführt sind.

4. Ladefläche nach den Ansprüchen 1, 2 und 3, dadurch gekennzeichnet, dass die Registrierungsabstufungen (1b) oder die Registrierungsausbuchungen (1d) Kreisbögen sind, die mittels eines oder mehrerer kreisförmigen Werkzeuge ausgeführt sind.

5. Ladefläche nach den Ansprüchen 1, 2, 3 und 4, dadurch gekennzeichnet, dass die mit den Verkeilungsmitteln zusammenwirkenden Ergänzungsformen zylindrische Finger oder Steine (A, B oder C) oder auch Finger oder Steine von anderem Querschnitte sind, die mit zwei bogenförmigen Abstufungen (1b) oder zwei Abstufungen (1b) von anderem Querschnitt zusammenarbeiten sollen, wobei diese Abstufungen entgegengesetzt sind.

6. Ladefläche nach den Ansprüchen 1, 2, 3 und 4, dadurch gekennzeichnet, dass die mit den Verkeilungsmitteln zusammenwirkenden Ergänzugsformen aus Blöcken oder Klötzchen (F) bestehen, derer Querschnitt zum Eingreifen zwischen einer Ausbauchung (1d) und einer Abstufung (1b) geeignet ist, die zueinander zugekehrt sind.

7. Ladefläche nach den Ansprüchen 1, 2, 3 und 4, dadurch gekennzeichnet, dass die mit den Verkeilungsmitteln zusammenwirkenden Ergänzungsformen aus Zangen (D) bestehen, derer Formgebung zum Übergreifen über den Rippen (1c) zwischen zwei Abstufungen (1b) geeignet ist.

8. Ladefläche nach den Ansprüchen 1, 2, 3 und 4, dadurch gekennzeichnet, dass die mit den Verkeilungsmitteln zusammenwirkenden Ergänzugsformen aus Bügeln (E) bestehen, derer Formgebung zum Übergreifen über den Rippen (1c) zwischen zwei Ausbauchungen (1d) geeignet ist.

9. Ladefläche nach den Ansprüchen 1, 2, 3 und 4, dadurch gekennzeichnet, dass die Abstufungen (1b) oder die Ausbauchungen (1d) senkrecht zu den grossen Oberflächen der Ladefläche mit einer Kegelgestalt ausgeführt sind, die ähnlich oder beinahe ähnlich der Kegelgestalt der Rippen (1a) oder (1c) ist.

10. Ladefläche nach Anspruch 1, dadurch gekennzeichnet, dass diese Ladefläche durch einen Kasten gebildet ist, der aus einem gerippten Blatt (3) und einer flachen Platte (5) besteht, die mit dem gerippten Blatt durch Vernieten (4) oder ein ähnliches Mittel gemäss einer Linie verbunden ist, die sich durch den Scheitel der Rippen (3a) erstreckt.

11. Ladefläche nach Anspruch 8, dadurch gekennzeichnet, dass die Registrierungsformen der Ladungsverkeilungsmittel aus Bünden (5a) bestehen, die hervorgehoben auf der Oberfläche der die Ladungen aufnehmenden Oberplatte (5) ausgeführt sind.

12. Ladefläche nach Anspruch 9, dadurch gekennzeichnet, dass die Bünde (5a) zwischen den Rippen (3a) des Blatts und in Fluchtlinie oder je Steigung, Steigungsunterteilung oder Steigungsmehrfache versetzt angeordnet sind.

13. Ladefläche nach den Ansprüchen 1, 8, 9 und 10, dadurch gekennzeichnet, dass die tiefgezogenen, hervorgehoben oder vertieft auf der Oberplatte (5) zwischen den Registrierungsbünden (5a) ausgeführten Formen (5b), eine niedrigere Höhe als die Höhe der Bünde (5a) haben.

14. Ladefläche nach den Ansprüchen 1 bis 11, dadurch gekennzeichnet, dass die querseitig angeordneten Rippen durch zusätzliches Tiefziehen an jedem Ende geschlossen sind, um ein Abflussgefälle (9b) in der Richtung von unterhalb der Ladefläche angebauten seitlichen Tropfrinnen (6) zu bilden.

0 017 599

*FIG.1*

*FIG.2*

*FIG. 3*

*FIG. 4*

*FIG. 5*

*FIG. 7*

*FIG. 6*

0 017 599

FIG.8

FIG.9

FIG.10

3